Europäisches Patentamt

European Patent Office

Office européen des brevets

(19)

(11) Veröffentlichungsnummer: **0 137 060**
**A1**

(12) **EUROPÄISCHE PATENTANMELDUNG**

(21) Anmeldenummer: **83110038.3**

(22) Anmeldetag: **07.10.83**

(51) Int. Cl.⁴: **B 60 R 9/12**

(43) Veröffentlichungstag der Anmeldung:
**17.04.85** Patentblatt **85/16**

(84) Benannte Vertragsstaaten:
**AT CH DE FR IT LI SE**

(71) Anmelder: **Telefiction Company Ltd.**
**Postfach 45.002**
**FL-9496 Balzers(LI)**

(72) Erfinder: **Kuoni, Xaver**
**Grossächer 396**
**CH-8966 Lieli(CH)**

(74) Vertreter: **Siebert, Rolf**
c/o R.A. Maspoli, R. Siebert Patentanwälte
**Promenadengasse 18**
**CH-8001 Zürich(CH)**

(54) Skiträger.

(57) Der Skiträger ist als einseitig eingespannter Träger im Form eines Tragkörpers (3) ausgebildet, welcher Mittel (5, 6) zu seiner Befestigung am Dach (1) eines Autos nur an seinem einen Ende aufweist. Um die auf ihn einwirkenden, bei der Fahrt auftretenden Windkräfte auffangen zu können, ohne von diesen vom Dack abgehoben zu werden, ist der Tragkörper (3) als nach unten offener Kasten ausgebildet, der in seinem Inneren mehrere parallel zueinander angeordnete Längsrippen trägt, die von Durchbrechungen (15) in verschiedene Abschnitte (13a bis 13e) unterteilt sind. Die Durchbrechungen (15) befinden sich unterhalb von U-förmig ausgebildeten Haltern (4) für die Skis (21).

Der Skiträger kann mit einem Tragzapfen (17) versehen sein, der ihn gegen zu grosse, das Dach (1) beschädigende Ausschläge schützt.

Die einseitige Einspannung ermöglicht eine Verwendung des Skiträgers auf praktisch allen Autos, ohne dass er vorerst den einzelnen Wagentypen angepasst werden muss, um ihn befestigen zu können.

FIG. 1

EP 0 137 060 A1

Croydon Printing Company Ltd.

## Skiträger

Die Erfindung betrifft einen Skiträger, zur Befestigung auf dem
Dach eines Autos, mit einem länglichen Tragkörper, mit Haltern
für jeden Ski auf demselben sowie mit Mitteln zur Befestigung des
Skiträgers am Dach des Autos.

Skiträger sind in sehr zahlreichen Ausführungen überall bekannt.
Die meisten bestehen aus Metall, meistens aus Leichtmetall, und
die Einrichtungen, mit denen sie am Dach des Autos befestigt, genau
gesagt in der Dachrinne verankert werden, sind ebenfalls sehr zahlreich. Allen bekannten Skiträgern aber ist gemeinsam, dass sie
auf beiden Seiten des Daches befestigt werden. Sie erstrecken sich
also quer über das letztere. Da jedoch die einzelnen Autos unterschiedlich breit sind, müssen die Skiträger so konstruiert sein,
dass man sie innerhalb gewisser Bereiche diesen verschiedenen Breiten anpassen kann. Das allseits verwendete Mittel hierzu ist eine
teleskopische Ausführung des Skiträgers. Das heisst er besteht
aus wenigstens zwei Teilen, die sich an ihren gemeinsamen Enden
ineinanderschieben lassen. Gelegentlich werden aber auch elastische
Zwischenglieder verwendet, die sich über eine gewisse Länge strecken
lassen, wenn der Skiträger auf ein breites Dach aufgesetzt werden
soll.

Diese Anpassungsfähigkeit trägt zwar zur Vergrösserung der jeweils
herzustellenden Stückzahl pro Serie bei. Dennoch verteuert sie
die Herstellung, und ausserdem lässt es sich nicht vermeiden, dass
wegen der begrenzten Wirkung dieser Anpassungsfähigkeit oder Ausziehbarkeit doch verschiedene Grössen für jedes Skiträgermodell
hergestellt werden müssen, um sich allen vorkommenden Dachbreiten
anpassen zu können.

Im weiteren ist zu bedenken, dass das Aufsetzen und Abnehmen des
Skiträgers, das wegen der erhöhten Diebstahlgefahr häufiger als
früher durchgeführt werden muss, relativ umständlich ist. Entweder
müssen zwei Personen zusammenarbeiten, oder die eine Person muss den Skiträger aufsetzen, ihn am einen Ende am Dach befestigen und
dann um das Auto herum auf die andere Seite gehen, um auch das
andere Ende zu befestigen.

Diesen dreifachen Nachteil der bisherigen Skiträger will der erfindungsgemässe Skiträger nach der eingangs erwähnten Art vermeiden.
Er ist erfindungsgemäss dadurch gekennzeichnet, dass der Tragkörper
die Befestigungsmittel nur an seinem einen Ende aufweist und im
befestigten Zustand von diesen aus als einseitig eingespannter
Träger abragt.

Ein Ausführungsbeispiel des erfindungsgemässen Skiträgers ist in
den beiliegenden Zeichnungen dargestellt, es zeigen:

| | |
|---|---|
| Figur 1 | den Skiträger von der Seite, montiert auf dem Dach eines Autos, |
| Figur 2 | die Unterseite des Skiträgers, ohne den ihn auf dem Autodach abstützenden Tragzapfen, |
| Figur 3 | im grösseren Massstab einen Schnitt längs der Linie III-III in Figur 2, und |
| Figur 4 | einen Schnitt längs der Linie IV-IV in Figur 3. |

Mit 1 ist mit einer gestrichelten Doppellinie das Dach eines Personenautos angedeutet, auf welchem der Skiträger paarweise hintereinander
aufgebracht wird. Die zwei gestrichelten Linien sollen einen Querschnitt durch das Dach andeuten, von dem nur ein Teil, mit der
einen, längsverlaufenden Dachrinne 2, dargestellt ist. Man ersieht
also bereits daraus, dass der Skiträger sich nicht wie üblich quer
über das ganze Dach, sondern nur über einen Teil, meist etwa über
einen Drittel der Breite, erstreckt; das genaue Verhältnis hängt
natürlich von der Dachbreite des Autos ab, an welchem der Skiträger
zum Einsatz gelangt. Der letztere weist einen Tragkörper 3 mit
senkrecht nach oben abstehenden, jeweils paarweise angeordneten
Haltern 4 sowie eine Befestigungslasche 5 auf. Die letztere ist
mittels einer Flügelmutter 6 am Tragkörper 3 angeschraubt und weist
einen im Querschnitt bogenförmigen unteren Rand 7 auf, der in üblicher Weise unter die Dachrinne 2 und die dort meist vorhandene,
nicht dargestellte Zierleiste greift, während der Tragkörper mit
seinem ebenfalls unteren Ende 8 von oben her in der Dachrinne 2
aufliegt. Ein annähernd kreisrunder Vorsprung 9 und eine entsprechende
Vertiefung 10 in der Befestigungslasche 5 wirken beim Anziehen
der Flügelmutter 6, die durch eine relativ zu ihrem Schaftdurchmesser grössere Bohrung 11 in der Befestigungslasche 5 hindurchführt
so zusammen, dass die letztere sich bei jedem Wagentyp an die Dachrinne anpassen kann; wegen des soeben erwähnten Unterschiedes zwischen Schaft- und Bohrungsdurchmesser kann sich der Abstand d zwischen
den unteren Enden 7 und 8 verändern.

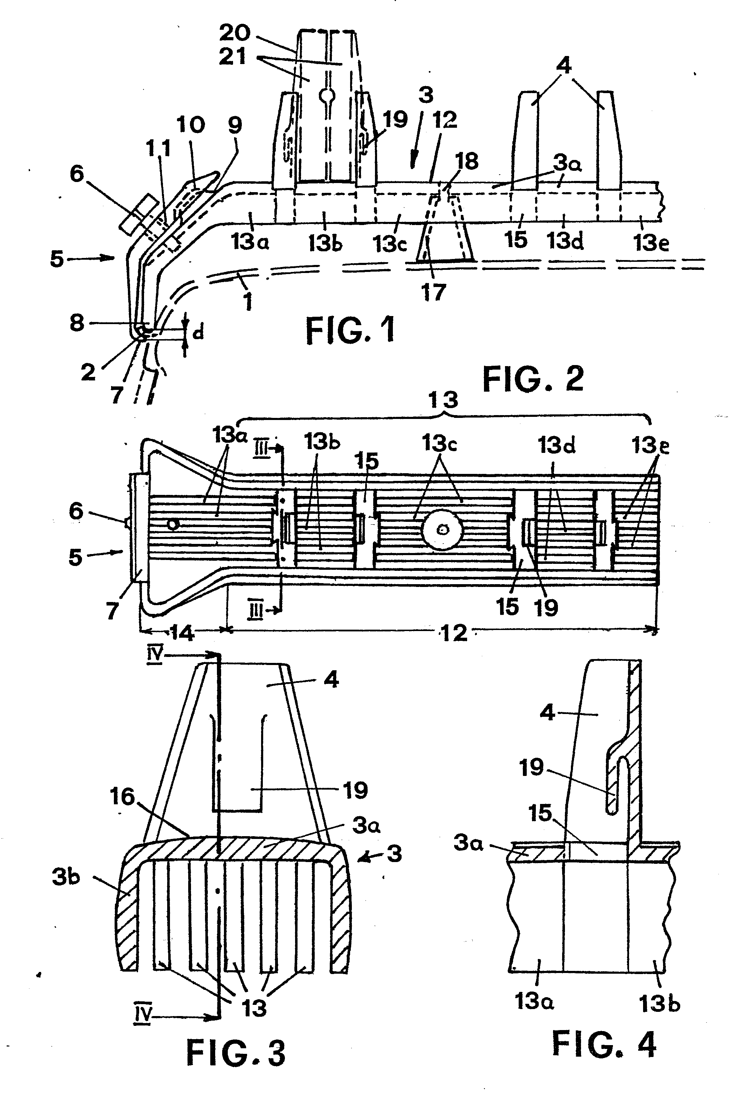

Dadurch, dass nur eine Befestigungslasche 5 vorhanden ist, wird
der Tragkörper 3 zu dem, was man in der Festigkeitslehre als einseitig eingespannten Träger bezeichnet, auf welchen Kräfte einwirken,
und zwar im vorliegenden Fall in verschiedenen Ebenen. Es handelt
sich bei diesen Kräften einerseits um das Gewicht der zwischen den
Haltern 4 festgespannten Skis, das zusammen mit dem allerdings
geringen Eigengewicht des Tragkörpers 3 vertikal wirkt, und andererseits um den bei fahrendem Wagen auftretenden Fahrtwind. Dieser
bewirkt Kräfte in zwei Ebenen, nämlich einerseits den Staudruck,
der horizontal (in Fig. 1 also senkrecht zur Zeichenebene) angreift,
und andererseits den durch die relative Umströmung des Skiträgers
und der Skis sich ergebenden sogenannten Tragflügeleffekt, der
wieder vertikal, aber entgegengesetzt zu den genannten Gewichten
wirkt und das Bestreben hat, den Skiträger nach oben vom Dach des
Wagens abzuheben. Dieser Tragflügeleffekt, der im wesentlichen
mit dem Quadrat der Fahrgeschwindigkeit zunimmt, kann unter Umständen
beträchtliche Werte annehmen. Im weiteren wirken beim Anfahren
und Abbremsen noch Massenträgheitskräfte, vor allem von den Skis,
die je nachdem gegen oder mit dem Staudruck wirken.

Es leuchtet ein, dass unter diesen Umständen der Tragkörper 3 nicht
einfach beliebig ausgebildet sein kann, wenn er nur an seinem einen
Ende 8 festgehalten ist. Vielmehr muss er auch bei hohen Fahrgeschwindigkeiten sowohl dem Staudruck als auch vor allem dem Tragflügeleffekt widerstehen können und zu diesem Zweck eine geeignete
Form aufweisen, wobei aber gleichzeitig herstellungstechnische
Erfordernisse (der Tragkörper besteht aus Kunststoff und wird im
Spritzgussverfahren hergestellt) zu berücksichtigen sind. Durch
Versuche hat sich die vorliegende Form als sehr zweckmässig erwiesen.
Der gegen sein Befestigungsende 8 hin zweifach abgewinkelte Tragkörper 3 ist demzufolge namentlich in seinem die Halter 4 tragenden
Bereich 12 als an seiner Unterseite offener Kasten, also im Querschnitt U-förmig, ausgebildet und trägt in diesem hohlen Inneren
mehrere parallel zueinander verlaufende Längsrippen 13. Diese weisen
im wesentlichen dieselbe Höhe auf wie die Seitenwände 3b des offenen
Kasten bzw. U-Profils, was sich durch Versuche strömungstechnisch
als beste Lösung erwiesen hat. Sie erstrecken sich, wie aus den
Figuren 1 und 2 hervorgeht, über den gesamten Bereich 12 hinaus
in den zur Aufnahme der Flügelmutter 6 dienenden Bereich 14 hinein,
wo sie auslaufen. Sie sind jedoch nicht durchgehend, sondern jeweils
unter den Haltern 4 mit vertikal verlaufenden, hauptsächlich durch
spritzgusstechnische Erfordernisse bedingten Durchbrechungen 15
in einzelne Abschnitte 13a bis 13e unterteilt. Die Längsrippen 13
und diese Durchbrechungen 15 bewirken während der Fahrt, zusammen
mit den im Querschnitt U-förmig ausgebildeten Haltern 4, eine Verwirbelung der Luftströmung, die den Tragflügeleffekt eines geschlossenen Körpers erheblich reduziert, wie durch Versuche nachgewiesen
werden konnte. Der Aufbau einer stationären Grenzschicht am Tragkörper, die zusammen mit diesem den Tragflügeleffekt verstärkt, wird
dadurch vermieden. Andererseits hält sich die Verwirbelung in

4

0137060

Grenzen, wozu auch die leicht bombierte Oberseite 16 des Quersteges 3a des Tragkörpers 3 sowie die ebenfalls an ihrer Aussenseite
leicht bombierten Seitenwände 3b beitragen (Figur 3), sodass nicht
neue Krafteinwirkungen entstehen. Nur noch die durch diese Massnahme nicht erfassbaren Staudruck- und Massenträgheitskräfte beim
Anfahren und Abbremsen müssen noch aufgenommen werden. Dies geschieht
durch eine Erweiterung des Bereiches 14 von seiner Uebergangsstelle
zum Bereich 12 bis zum unteren Rand 8 des Tragkörpers 3, wie dies
aus Figur 2 klar ersichtlich ist. Man ersieht dort auch, dass die
Breite hierbei stetig zunimmt. Damit wird am unteren Rand 8 eine
breite Auflagefläche geschaffen, welche in der Lage ist, die durch
die genannten Kräfte bewirkten Drehmomente sicher aufzufangen.

Fahrversuche haben die Zweckmässigkeit der dargestellten Ausbildung
des Tragkörpers 3 bewiesen; der Skiträger verhält sich selbst bei
Geschwindigkeiten bis zu 200 km/h und auch bei starkem Abbremsen
aus diesen Geschwindigkeiten völlig vibrationsfrei, und dies trotz
der nur einseitigen Befestigung am Dach.

Um den Tragkörper 3 namentlich beim Beladen vor Durchbiegungen
zu schützen, die eventuell das Dach beschädigen könnten, ist ein
Tragzapfen 17 vorgesehen. Dieser wird mit seiner Spitze in eine
Bohrung 18 eingesteckt, die sich im Abschnitt 13c der Längsrippen
befindet, welche dort teilweise unterbrochen sind. Der Tragzapfen
könnte als Saugnapf ausgebildet sein, um den Skiträger noch besser
zu verankern. Aus den oben geschilderten Gründen ist dies jedoch
kein zwingendes Erfordernis.

Die in den Figuren 1 und 2 sowie namentlich aus Figur 4 ersichtlichen
Haken 19 dienen zum Anbringen von elastischen Bändern 20 (Figur 1),
mit welchen die Skis 21 fest zwischen den Haltern 4 verankert werden.

Mit der vorliegenden Erfindung wird ein sehr zweckmässiger Skiträger
geschaffen, der sich an praktisch jedem Auto montieren lässt, ohne
vorerst demselben angepasst werden zu müssen, und der ferner wegen
seiner geringen Länge bei Nichtgebrauch wenig Platz im Auto beansprucht und dennoch alle Erfordernisse an die Stabilität erfüllt.

Patentansprüche
_____

1. Skiträger, zur Befestigung auf dem Dach (1) eines Autos, mit
   einem länglichen Tragkörper (3), mit Haltern (4) für jeden Ski
   auf demselben (3) sowie mit Mitteln (5, 6) zur Befestigung des
   Skiträgers am Dach (1) des Autos, dadurch gekennzeichnet, dass
   der Tragkörper (3) die Befestigungsmittel (5, 6) nur an seinem
   einen Ende aufweist und im befestigten Zustand von diesen aus
   als einseitig eingespannter Träger abragt.

2. Skiträger, nach Anspruch 1, dadurch gekennzeichnet, dass der
   Tragkörper (3) als an seiner Unterseite offener Kasten ausgebildet ist, der wenigstens in seinem die Halter (4) aufweisenden
   Bereich (12) mit Mitteln (13, 15) zur Verwirbelung des Fahrtwindes, der während der Fahrt des Autos auf den Skiträger einwirkt,
   versehen ist.

3. Skiträger nach Anspruch 2, dadurch gekennzeichnet, dass diese
   Mittel im wesentlichen im Innern des Tragkörpers (3), der im
   Querschnitt U-förmig ausgebildet ist, angeordnet sind und aus
   mehreren parallel zueinander verlaufenden und vom Quersteg (3a)
   des U-Profils nach unten hängenden Längsrippen (13) sowie Durchbrechungen (15) bestehen.

4. Skiträger nach Anspruch 3, dadurch gekennzeichnet, dass die
   Längsrippen (13) dieselbe Höhe aufweisen wie die Schenkel (3b)
   des U-Profils.

5. Skiträger nach Anspruch 4, dadurch gekennzeichnet, dass die
   Längsrippen (13) von den Durchbrechungen (15) in einzelne Anschnitte (13a - 13e) unterteilt sind.

6. Skiträger nach Anspruch 3, dadurch gekennzeichnet, dass der
   Quersteg (3a) des Tragkörpers (3) eine bombierte Oberseite (16)
   aufweist.

7. Skiträger nach Anspruch 2, dadurch gekennzeichnet, dass der
   Tragkörper einen die Befestigungsmittel (5, 6) aufweisenden
   weiteren Bereich (14) enthält, der von dem die Halter (4) aufweisenden Bereich (12) aus sich gegen das untere Ende (8) des
   Tragkörpers hin stetig erweitert.

8. Skiträger nach Anspruch 2, dadurch gekennzeichnet, dass er in
   dem die Halter (4) aufweisenden Bereich (14) des Tragkörpers
   (3) einen ihn auf dem Autodach (1) abstützenden Tragzapfen (17)
   aufweist.

9. Skiträger nach Anspruch 8, dadurch gekennzeichnet, dass der
   Tragzapfen (17) als ein zum Halten auf dem Autodach (1) bestimmter Saugnapf ausgebildet ist.

0137060

**FIG. 1**

**FIG. 2**

**FIG. 3**

**FIG. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 528 473 (MIGLIASSO) <br> * Insgesamt * <br><br> --- | 1,7,8 | B 60 R 9/12 |
| A | CH-A- 316 062 (LAWRIC) <br> * Ansprüche * <br><br> ----- | 1,9 | |

**RECHERCHIERTE SACHGEBIETE (Int. Cl. 3)**

B 60 R 9/12

Der vorliegende Recherchenbericht wurde für alle Patentansprüche erstellt.

| Recherchenort | Abschlußdatum der Recherche | Prüfer |
|---|---|---|
| DEN HAAG | 04-01-1984 | SCHMITTER J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82